(19) **Europäisches Patentamt / European Patent Office / Office européen des brevets**

(11) **EP 3 230 636 B1**

(12) # EUROPEAN PATENT SPECIFICATION

(45) Date of publication and mention of the grant of the patent:
**24.04.2024 Bulletin 2024/17**

(21) Application number: **15804444.6**

(22) Date of filing: **02.12.2015**

(51) International Patent Classification (IPC):
**F16L 9/12** (2006.01)     **C08L 23/08** (2006.01)
**C08F 210/16** (2006.01)     **C08F 4/656** (2006.01)
**C08K 3/04** (2006.01)

(52) Cooperative Patent Classification (CPC):
(C-Sets available)
**C08K 3/04;** A01G 25/02; C08L 2203/18;
C08L 2207/06; C08L 2314/02; F16L 9/12     (Cont.)

(86) International application number:
**PCT/EP2015/078359**

(87) International publication number:
**WO 2016/091681 (16.06.2016 Gazette 2016/24)**

(54) **POLYETHYLENE COMPOSITION AND PIPE COMPRISING SUCH COMPOSITION**

POLYETHYLENZUSAMMENSETZUNG UND ROHR MIT DIESER ZUSAMMENSETZUNG

COMPOSITION DE POLYÉTHYLÈNE ET TUYAU COMPRENANT UNE TELLE COMPOSITION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.12.2014 EP 14197549**
**05.01.2015 US 201562099613 P**

(43) Date of publication of application:
**18.10.2017 Bulletin 2017/42**

(73) Proprietor: **SABIC Global Technologies B.V.**
**4612 PX Bergen op Zoom (NL)**

(72) Inventors:
• **HABIBI, Salaheldin M A.**
**Saudi Arabia 11422 (SA)**
• **MOMAN, Akhlaq**
**Saudi Arabia 11422 (SA)**
• **AL-OTAIBI, Abdullah Shamroukh**
**Riyadh 11422 (SA)**

(74) Representative: **Sabic Intellectual Property Group**
**Sabic Intellectual Property Department**
**P.O. Box 3008**
**6160 GA Geleen (NL)**

(56) References cited:
**EP-A1- 2 730 612       EP-A2- 0 949 274**
**WO-A1-2012/069157       US-A1- 2010 003 439**
**US-A1- 2010 129 579**

(52) Cooperative Patent Classification (CPC): (Cont.)

C-Sets
**C08F 210/16, C08F 4/651;**
**C08F 210/16, C08F 4/6565;**
**C08F 210/16, C08F 4/6586;**
**C08K 3/04, C08L 23/04;**
C08F 210/16, C08F 210/08, C08F 2500/08,
C08F 2500/12, C08F 2500/18

C-Sets
**C08F 210/16, C08F 4/651;**

**Description**

The present invention relates to a polyethylene composition comprising polyethylene made using a Ziegler-Natta catalyst. The present invention further relates to a pipe comprising such composition.

Drip irrigation is used by farms, commercial greenhouses, and residential gardeners. Drip irrigation is adopted extensively in areas of acute water scarcity and especially for crops and trees such as coconuts, containerized landscape trees, grapes, bananas, ber, eggplant, citrus, strawberries, sugarcane, cotton, maize, and tomatoes. The pipes for drip irrigation system have perforations arranged at intervals along the pipe wall and typically also so called "emitters", known also e.g. as (drip) inserts, drippers or fittings, which are inserted to the pipe wall at the location of the perforation and are typically designed to charge water at predetermined rate from said perforation. Drip irrigation pipes are normally thin-walled with typical diameter of less than 35 mm. The cross-section can be round or flattened to an ellipse shape.

Currently, the drip irrigation pipes are mainly fabricated from LLDPE (linear low density polyethylene), LDPE (low density polyethylene) or a blend of both. Typically, the LLDPE for making such pipes is made by a Ziegler-Natta catalyst. For example, WO2014/072056 discloses a polymer composition comprising (A) a polymer base resin comprising a multimodal LLDPE obtainable by polymerization in the presence of a Ziegler-Natta catalyst and (B) carbon black. Drip irrigation pipes are used for transportation of water and their cracking resistance is therefore especially important.

There is accordingly a need in the industry for a composition suitable for making pipes having improved mechanical properties such as environmental stress cracking resistance (ESCR).

It is an object of the invention to provide a composition suitable for making a pipe having improved mechanical properties such as ESCR.

Accordingly, the invention provides:

A pipe comprising or consisting of a polyethylene, wherein the polyethylene is produced in the presence of a solid catalyst component and a co-catalyst, wherein the solid catalyst component is prepared by a process comprising the steps of:

(a) contacting a dehydrated support having hydroxyl groups with a magnesium compound having the general formula $MgR^1R^2$, wherein $R^1$ and $R^2$ are the same or different and are independently selected from the group comprising an alkyl group, alkenyl group, alkadienyl group, aryl group, alkaryl group, alkenylaryl group and alkadienylaryl group;

(b) contacting the product obtained in step (a) with modifying compounds (A), (B) and (C), wherein:

(A) is at least one compound selected from the group consisting of carboxylic acid, carboxylic acid ester, ketone, acyl halide, aldehyde and alcohol;

(B) is a compound having the general formula $R^{11}{}_f(R^{12}O)_gSiX_h$, wherein f, g and h are each integers from 0 to 4 and the sum of f, g and h is equal to 4 with a proviso that when h is equal to 4 then modifying compound (A) is not an alcohol, Si is a silicon atom, O is an oxygen atom, X is a halide atom and $R^{11}$ and $R^{12}$ are the same or different and are independently selected from the group comprising an alkyl group, alkenyl group, alkadienyl group, aryl group, alkaryl group, alkenylaryl group and alkadienylaryl group;

(C) is a compound having the general formula $(R^{13}O)_4M$, wherein M is a titanium atom, a zirconium atom or a vanadium atom, O is an oxygen atom and $R^{13}$ is selected from the group comprising an alkyl group, alkenyl group, alkadienyl group, aryl group, alkaryl group, alkenylaryl group and alkadienylaryl group; and

(c) contacting the product obtained in step (b) with a titanium halide compound having the general formula $TiX_4$, wherein Ti is a titanium atom and X is a halide atom, whereby the polyethylene has a molecular weight Mz+1 of at least 720,000 g/mol than 2,500,000 g/mol;

wherein the polyethylene has a density of about 910 $kg/m^3$ to about 925 $kg/m^3$, and wherein the polyethylene has a molecular weight distribution (MWD) of 3.6 to 5.5.

It was surprisingly found that the composition according to the invention has good mechanical properties such as high melt stretching force and melt stretching stress and a high ESCR, making it especially suitable for producing a pipe, especially a drip irrigation pipe.

It is noted that WO 2012/069157 describes a process for producing polyethylene and its copolymers in the presence of the solid catalyst component prepared according to the process as described above. WO 2012/069157 mentions various applications for the ethylene polymers and copolymers obtained according to this process. WO 2012/069157 however does not mention the stretching force, melt stretching stress or ESCR of the ethylene (co)polymers or the use of the ethylene (co)polymers for a drip irrigation pipe.

The polyethylene produced has a density of about 910 $kg/m^3$ to about 925 $kg/m^3$. Polyethylene having such density are typically called LLDPE. Polyethylene having such density has suitable mechanical properties for use in a pipe, especially a drip irrigation pipe.

Various ways are known for defining the molecular weight of the polyethylene as follows, where Mi is the molecular weight of a chain and Ni is the number of chains of that molecular weight,

$$Mn = \Sigma NiMi/ \Sigma Ni$$

$$Mw = \Sigma NiMi^2/ \Sigma Ni$$

$$Mz = \Sigma NiMi^3/ \Sigma Ni^2$$

$$Mz+1 = \Sigma NiMi^4/ \Sigma Ni^3$$

The polyethylene has a molecular weight distribution Mw/Mn of 3.6 to 5.5, more preferably 3.6 to 5.0. This relatively high MWD indicates a good processability, a high melt stretching, high die swell and high strain hardening. The relatively high MWD also indicates a high ESCR.

The polyethylene has a molecular weight Mz+1 of at least 720,000 g/mol, more preferably at least 800,000 g/mol, more preferably at least 900,000 g/mol, more preferably at least 1,000,000 g/mol, more preferably at least 1,500,000 g/mol, more preferably at least 2,000,000 g/mol.

According to the present invention, the polyethylene may thereby have a molecular weight Mz+1 of for example between 800,000 g/mol and 2,000,000, preferably between 900,000 g/mol and 1,700,000 g/mol, further preferred between 1,000,000 g/mol and 1,600,000 g/mol, and/or an Mz/Mw of between 2.8 and 4.5, preferably between 3 and 4, further preferred between 3.2 und 3.8, further preferred between 3.4 and 3.7 and/or an Mz+1/Mw of between 6 and 10, preferably between 7 and 9, further preferred between 8 and 9, and/or an Mz between 350,000 g/mol and 1,200,000 g/mol, preferably between 400,000 g/mol and 1,000,000 g/mol, further preferred between 450,000 g/mol and 900,000 g/mol, further preferred between 500,000 g/mol and 800,000 g/mol, further preferred between 550,000 g/mol and 750,000 g/mol. These parameter may be determined according to ASTM D-6474-99.

The relatively high Mz+1 means that more co-monomer is incorporated in the higher molecular zone of the distribution and thus more tie bonds, which in turn leads to a high ESCR. The relatively high Mz+1 also indicates a high die swell.

Preferably, the polyethylene has a melt stretching force of at least 5 cN, more preferably at least 6 cN. Preferably, the polyethylene has a melt stretching stress of at least 1.2 N/mm$^2$, more preferably at least 1.5 N/mm$^2$, more preferably at least 2.0 N/mm$^2$, more preferably at least 3.0 N/mm$^2$. The melt stretching force and melt stretching stress can be determined by a capillary rheometer by attaching an end of a melt strand of the polyethylene placed in the capillary rheometer to a pulley and accelerating the pulley at 0.12 cm/s$^2$ at 190 °C until the melt strand breaks. The capillary rheometer has a die diameter of 1mm and a die length of 10 mm. The maximum force and stress before breakage/rupture are registered as the melt stretching force and the melt stretching stress, respectively. The melt stretching force and stress are a measure of the extensional viscosity of polymer melt. They represent the maximum tension that can be applied to the melt without rupture or tearing.

Preferably, a molded article made of the polyethylene has an Environmental Stress-Cracking Resistance (ESCR) of at least 1500 hours , more preferably at least 2000 hours as determined by ASTM D1693B.

The carbon black can be of any type feasible for use in irrigation pipes. Carbon black has preferably an average particle size of from 0.01 to 0.25 microns and max volatile matter of 9 wt %. The type of carbon black can e.g. be furnace carbon black. Furnace carbon black has a very well known meaning. Suitable carbon blacks are commercially available from several suppliers including Cabot and Colombian, and can be selected accordingly by a person skilled in the art. Carbon black can be added to the polyethylene 1) as such (neat), 2) in form of a master batch, which comprises said carbon black together with a carrier polymer which is other than the polyethylene, or, preferably, 3) carbon black can be premixed together with the part or total amount of the polyethylene. Premixing can be effected in a conventional, commercial mixer or extruder using conventional mixing conditions as well known in the art. When premix contains only part of the polyethylene, then the amount of carbon black may be from 20 to 50 wt %, preferably 30 to 50 wt %, based on the amount of the premix.

Moreover, said premix of carbon black and polyethylene is preferably extruded to pellet form.

The polymer composition comprises, preferably consists of, the polyethylene, carbon black and optional additives.

The amounts of the components, preferably of the polyethylene, carbon black and optional additives, make up the total amount of the polyethylene composition of 100 wt %. The amount of the polyethylene is preferably at least 80 wt %, preferably from 80 to 99 wt %, preferably from 85 to 99 wt %, more preferably from 90 to 98.5 wt %, from 91 to 98.2 wt %, based on the total amount of the polyethylene composition (100 wt %).

The amount of the carbon black is preferably from 1 to 10 wt %, preferably from 1.5 to 9.0 wt %, more preferably from 1.8 to 8.0 wt %, more preferably 1.8 to 3.5 wt %, based on the total amount of the polyethylene composition (100 wt %).

In addition to the polyethylene and carbon black, usual additives for utilization with polyolefins, such as stabilizers (e.g. antioxidant agents), acid scavengers and/or antistatic agents and utilization agents (such as processing aid agents) may be present in the polyethylene or polyethylene composition. Carbon black has a UV stabilizing function, but further anti-UV's other than carbon black may also be present. Preferably, the total amount of these additives is 19 wt% or less, more preferably 10 wt% or less, more preferably 5 wt % or less, more preferably 2 wt % or less, most preferably 1 wt % or less, based on the total amount of the polyethylene or polyethylene composition (that represents 100 wt %). Additives may thus be selected from one or more of stabilizers, especially antioxidant agents, acid scavengers and/or antistatic agents and utilization agents, especially processing aid agents, whereby the total amount of these additives is between 0 wt% and 19 wt%, preferably between 0 wt% and 10 wt%, further preferred between 0 wt% and 5 wt%, further preferred between 0 wt% and 2 wt%, further preferred between 0 wt% and 1 wt% based on the total amount of the polyethylene or polyethylene composition (that represents 100 wt %).

The invention further relates to a pipe comprising or consisting of the polyethylene composition according to the invention.

The pipe according to the invention has a high Environmental Stress-Cracking Resistance, which can be determined by ISO8796.

Methods for producing a pipe from polyethylene are well-known and any know methods can be used. The most typical method is extrusion.

Accordingly, the present invention provides a process for making the pipe according to the invention. The process may comprise the steps of: providing the polyethylene composition according to the invention, melting the polyethylene composition and extruding the polyethylene from a die.

The pipe according to the invention may have a wide range of length and a thickness. The thickness (difference between the outer diameter and the inner diameter) may e.g. be 1-10 mm, more typically 1-3 mm. The pipe may have an outer diameter of 3-30 mm and an inner diameter of 1-29 mm. The pipe according to the invention is preferably a drip irrigation pipe. A typical example of a drip irrigation pipe has an outer diameter of 16 mm, a wall thickness of 1.2 mm and an inner diameter of 13.6 mm.

Catalyst system

Solid component

The solid support used according to the present invention is any material containing hydroxyl groups. Suitable examples of such materials include inorganic oxides, such as silica, alumina, magnesia, thoria, zirconia and mixtures of such oxides. Preferably, porous silica is used as the support according to the present invention as higher bulk densities and higher catalyst productivities are obtained therewith. Silica may be in the form of particles having a mean particle diameter of about 1 micron to about 500 microns, preferably from 5 microns to 150 microns and most preferably from 10 microns to 100 microns. Lower mean particle diameter produce a higher level of polymer fines and higher mean particle diameter reduces polymer bulk density. The silica may have a surface area of about 5 $m^2$/g to about 1500 $m^2$/g, preferably from 50 $m^2$/g to 1000 $m^2$/g and a pore volume of from about 0.1 $cm^3$/g to about 10.0 $cm^3$/g, preferably from 0.3 $cm^3$/g to 3.5 $cm^3$/g, as higher catalyst productivity is obtained in this range.

The dehydrated solid support can be obtained by drying the solid support in order to remove physically bound water and to reduce the content of hydroxyl groups to a level which may be of from about 0.1 mmol to about 5.0 mmol hydroxyl groups per gram of support, preferably from about 0.2 mmol to about 2.0 mmol hydroxyl groups per gram of support, as this range allows sufficient incorporation of the active catalyst components to the support, determined by the method as described in J.J. Fripiat and J. Uytterhoeven, J. Phys. Chem. 66, 800, 1962 or by applying $^1$H NMR spectroscopy. The hydroxyl groups content in this range may be achieved by heating and fluidizing the support at a temperature of from about 150°C to about 900°C for a time of about 1 hour to about 15 hours under a nitrogen or air flow. The dehydrated support can be slurried, preferably by stirring, in a suitable hydrocarbon solvent in which the individual catalyst components are at least partially soluble. Examples of suitable hydrocarbon solvents include n-pentane, isopentane, cyclopentane, n-hexane, isohexane, cyclohexane, n-heptane, isoheptane, n-octane, isooctane and n-decane. The amount of solvent used is not critical, though the solvent should be used in an amount to provide good mixing of the catalyst components.

The magnesium compound is represented by the general formula $MgR^1R^2$, wherein $R^1$ and $R^2$ are the same or different and are independently selected from a group comprising an alkyl group, alkenyl group, alkadienyl group, aryl group, alkaryl group, alkenylaryl group and an alkadienylaryl group and may have from 1 to 20 carbon atoms. Suitable examples of the magnesium compound include dimethylmagnesium, diethylmagnesium, ethylmethylmagnesium, di-n-propylmagnesium, diisopropylmagnesium, n-propylethylmagnesium, isopropylethylmagnesium, di-n-butylmagnesium, diisobutylmagnesium, n-butylethylmagnesium, n-butyl-n-propylmagnesium, n-butylisopropylmagnesium, isobutylethylmagnesium, isobutyl-n-propylmagnesium, isobutylisopropylmagnesium, din-pentylmagnesium, diisopentylmagnesium, n-pentylethylmagnesium, n-pentyl-n-propylmagnesium, n-pentylisopropylmagnesium, n-pentyl-n-butylmagnesium, n-pentylisobutylmagnesium, di-n-hexylmagnesium, diisohexylmagnesium, n-hexylethylmagnesium, n-hexyl-n-propylmagnesium, n-hexylisopropyl magnesium, n-hexyl-n-butylmagnesium, n-hexylisobutylmagnesium, isohexylethylmagnesium, isohexyl-n-propylmagnesium, isohexylisopropyl magnesium, isohexyl-n-butylmagnesium, isohexylisobutylmagnesium, di-n-octylmagnesium, diisooctylmagnesium, n-octylethylmagnesium, n-octyl-n-propylmagnesium, n-octylisopropylmagnesium, n-octyl-n-butylmagnesium, n-octylisobutyl magnesium, isooctylethylmagnesium, isooctyl-n-propylmagnesium, isooctylisopropylmagnesium, isooctyl-n-butylmagnesium, isooctylisobutyl magnesium, dicyclopentylmagnesium, cyclopentylethylmagnesium, cyclopentyl-n-propylmagnesium, cyclopentylisopropylmagnesium, cyclopentyl-n-butylmagnesium, cyclopentylisobutylmagnesium, dicyclohexylmagnesium, cyclohexylethylmagnesium, cyclohexyl-n-propylmagnesium, cyclohexylisopropyl magnesium, cyclohexyl-n-butylmagnesium, cyclohexylisobutylmagnesium, diphenylmagnesium, phenylethylmagnesium, phenyl-n-propylmagnesium, phenyl-n-butylmagnesium and mixtures thereof.

Preferably, the magnesium compound is selected from the group comprising di-n-butylmagnesium, n-butylethylmagnesium and n-octyl-n-butylmagnesium.

The magnesium compound can be used in an amount ranging from about 0.01 to about 10.0 mmol per gram of solid support, preferably from about 0.1 to about 3.5 mmol per gram of support and more preferably from 0.3 to 2.5 mmol per gram of support as by applying this range the level of polymer fines of the product is reduced and higher catalyst productivity is obtained. The magnesium compound may be reacted, preferably by stirring, with the support at a temperature of about 15°C to about 140°C during about 5 minutes to about 150 minutes, preferably at a temperature of about 20°C to 80°C for a duration of 10 minutes to 100 minutes.

The molar ratio of Mg to OH groups in the solid support applied according to the present invention can be in the range of about 0.01 to about 10.0, preferably of from about 0.1 to about 5.0 and more preferably of from about 0.1 to about 3.5, as the level of polymer fines of the product is reduced and higher catalyst productivity is obtained.

The modifying compound (A) is at least one compound selected from the group consisting of carboxylic acids, carboxylic acid esters, ketones, acyl halides, aldehydes and alcohols. The modifying compound (A) may be represented by the general formula $R^3COOH$, $R^4COOR^5$, $R^6COR^7$, $R^8COX$, $R^9COH$ or $R^{10}OH$, wherein X is a halide atom and $R^3$, $R^4$, $R^5$, $R^6$, $R^7$, $R^8$, $R^9$ and $R^{10}$ are independently selected from a group of compounds comprising an alkyl group, alkenyl group, alkadienyl group, aryl group, alkaryl group, alkenylaryl group and an alkadienylaryl group and may have from 1 to 20 carbon atoms.

Suitable examples of the carboxylic acids include acetic acid, propionic acid, isopropionic acid, butyric acid, isobutyric acid, valeric acid, isovaleric acid, caproic acid, isocaproic acid, enanthic acid, isoenanthic acid, caprylic acid, isocaprylic acid, pelargonic acid, isopelargonic acid, capric acid, isocapric acid, cyclopentanecarboxylic acid, benzoic acid and mixtures thereof.

Suitable examples of carboxylic acid esters include methyl acetate, ethyl acetate, n-propyl acetate, isopropyl acetate, n-butyl acetate, isobutyl acetate, isoamyl acetate, ethyl butyrate, n-butyl butyrate and/or isobutyl butyrate.

Suitable examples of ketones include dimethyl ketone, diethyl ketone, methyl ethyl ketone, di-n-propyl ketone, di-n-butyl ketone, methyl n-propyl ketone, methyl isobutyl ketone, cyclohexanone, methyl phenyl ketone, ethyl phenyl ketone, n-propyl phenyl ketone, n-butyl phenyl ketone, isobutyl phenyl ketone, diphenyl ketone and mixtures thereof.

Suitable examples of acyl halides include ethanoyl chloride, propanoyl chloride, isopropanoyl chloride, n-butanoyl chloride, isobutanoyl chloride, benzoyl chloride and mixtures thereof.

Suitable examples of aldehydes include acetaldehyde, propionaldehyde, n-butyraldehyde, isobutyraldehyde, n-pentanaldehyde, isopentanaldehyde, n-hexanaldehyde, isohexanaldehyde, n-heptanaldehyde, benzaldehyde and mixtures thereof.

Suitable examples of alcohols include methanol, ethanol, n-propanol, isopropanol, n-butanol, isobutanol, sec-butanol, tert-butanol, cyclobutanol, n-pentanol, isopentanol, cyclopentanol, n-hexanol, isohexanol, cyclohexanol, n-octanol, isooctanol, 2-ethylhexanol, phenol, cresol, ethylene glycol, propylene glycol and mixtures thereof.

Preferably, the modifying compound (A) is at least one compound selected from the group comprising methyl n-propyl ketone, ethyl acetate, n-butyl acetate, acetic acid, isobutyric acid, isobutyraldehyde, ethanoyl chloride, ethanol and sec-butanol, and more preferably from methyl n-propyl ketone, n-butyl acetate, isobutyric acid and ethanoyl chloride as higher catalyst productivity and higher bulk density of the products are obtained and these compounds can be used to vary molecular weight distribution of the product.

The molar ratio of modifying compound (A) to magnesium in the solid support can be in a range of from about 0.01 to about 10.0, preferably of from about 0.1 to about 5.0, more preferably of from about 0.1 to about 3.5 and most preferably of from 0.3 to 2.5, as higher catalyst productivity and higher bulk density of the products are obtained. The modifying compound (A) may be added to the reaction product obtained in step (a), preferably by stirring, at a temperature of about 15°C to about 140°C for a duration of about 5 minutes to about 150 minutes, preferably at a temperature of 20°C to 80°C for a duration of 10 minutes to 100 minutes. The modifying compound (B) is a silicon compound represented by the general formula $R^{11}_f(R^{12}O)_gSiX_h$ , wherein f, g and h are each integers from 0 to 4 and the sum of f, g and h is equal to 4 with a proviso that when h is equal to 4 then modifying compound (A) is not an alcohol, Si is a silicon atom, O is an oxygen atom, X is a halide atom and $R^{11}$ and $R^{12}$ are the same or different. $R^{11}$ and $R^{12}$ are independently selected from the group of compounds comprising an alkyl group, alkenyl group, alkadienyl group, aryl group, alkaryl group, alkenylaryl group and an alkadienylaryl group. $R^{11}$ and $R^{12}$ may have from 1 to 20 carbon atoms.

Suitable silicon compounds include tetramethoxysilane, tetraethoxysilane, tetra-n-propoxysilane, tetraisopropoxysilane, tetra-n-butoxysilane, tetraisobutoxysilane, methyltrimethoxysilane, ethyltrimethoxysilane, n-propyltrimethoxysilane, isopropyltrimethoxysilane, n-butyltrimethoxysilane, isobutyltrimethoxysilane, n-pentyltrimethoxysilane, n-hexyltrimethoxysilane, n-octyltrimethoxysilane, isooctyltrimethoxysilane, vinyltrimethoxysilane, phenyltrimethoxysilane, dimethyldimethoxysilane, diethyldimethoxysilane, isobutylmethyldimethoxysilane, diisopropyldimethoxysilane, diisobutyldimethoxysilane, isobutylisopropyldimethoxysilane, dicyclopentyldimethoxysilane, cyclohexylmethyldimethoxysilane, phenylmethyldimethoxysilane, diphenyldimethoxysilane, trimethylmethoxysilane, triethylmethoxysilane, methyltriethoxysilane, ethyltriethoxysilane, n-propyltriethoxysilane, isopropyltriethoxysilane, n-butyltriethoxysilane, isobutyltriethoxysilane, n-pentyltriethoxysilane, n-hexyltriethoxysilane, n-octyltriethoxysilane, isooctyltriethoxysilane, vinyltriethoxysilane, phenyltriethoxysilane, dimethyldiethoxysilane, diethyldiethoxysilane, isobutylmethyldiethoxysilane, diisopropyldiethoxysilane, diisobutyldiethoxysilane, isobutylisopropyldiethoxy silane, dicyclopentyldiethoxysilane, cyclohexylmethyldiethoxysilane, phenylmethyldiethoxysilane, diphenyldiethoxysilane, trimethylethoxysilane, triethylethoxysilane, silicon tetrachloride, methyltrichlorosilane, ethyltrichlorosilane, n-propyltrichlorosilane, isopropyltrichlorosilane, n-butyltrichlorosilane, isobutyltrichlorosilane, n-pentyltrichlorosilane, n-hexyltrichlorosilane, n-octyltrichlorosilane, isooctyltrichlorosilane, vinyl Itrichlorosilane, phenyltrichlorosilane, dimethyldichlorosilane, diethyl dichlorosilane, isobutylmethyldichlorosilane, diisopropyldichlorosilane, diisobutyldichlorosilane, isobutylisopropyldichlorosilane, dicyclopentyldichloro silane, cyclohexylmethyldichlorosilane, phenylmethyldichlorosilane, diphenyldichlorosilane, trimethylchlorosilane, triethylchlorosilane, chloro trimethoxysilane, dichlorodimethoxysilane, trichloromethoxysilane, chloro triethoxysilane, dichlorodiethoxysilane and/or trichloroethoxysilane. Preferably, the modifying compound (B) used is tetraethoxysilane, n-propyltriethoxysilane, isobutyltrimethoxysilane, dimethyldichlorosilane, n-butyltrichlorosilane and silicon tetrachloride, and more preferably isobutyltrimethoxysilane, tetraethoxysilane, n-propyltriethoxysilane, n-butyltrichlorosilane and silicon tetrachloride as higher catalyst productivity and higher bulk density are obtained with the ability to vary the molecular weight distribution of the product by employing these preferred compounds.

The molar ratio of modifying compound (B) to magnesium may be in a range of from about 0.01 to about 5.0, preferably from about 0.01 to about 3.0, more preferably from about 0.01 to about 1.0 and most preferably from about 0.01 to about 0.3, as higher catalyst productivity and higher bulk density are obtained. The modifying compound (B) may be added to the reaction product obtained in step (a), preferably by stirring, at a temperature of about 15°C to about 140°C during about 5 minutes to about 150 minutes, preferably at a temperature of 20°C to 80°C during 10 minutes to 100 minutes.

The modifying compound (C) is a transition metal alkoxide represented by the general formula $(R^{13}O)_4M$, wherein M is a titanium atom, a zirconium atom or a vanadium atom, O is an oxygen atom and $R^{13}$ is a compound selected from the group of compounds comprising an alkyl group, alkenyl group, alkadienyl group, aryl group, alkaryl group, alkenylaryl group and an alkadienylaryl group. $R^{13}$ may have from 1 to 20 carbon atoms.

Suitable transition metal alkoxide compounds include titanium tetramethoxide, titanium tetraethoxide, titanium tetra-n-propoxide, titanium tetraisopropoxide, titanium tetra-n-butoxide, titanium tetraisobutoxide, titanium tetra-n-pentoxide, titanium tetraisopentoxide, titanium tetra-n-hexoxide, titanium tetra-n-heptoxide, titanium tetra-n-octoxide, titanium tetracyclohexoxide, titanium tetrabenzoxide, titanium tetraphenoxide, zirconium tetramethoxide, zirconium tetraethoxide, zirconium tetra-n-propoxide, zirconium tetraisopropoxide, zirconium tetra-n-butoxide, zirconium tetraisobutoxide, zirconium tetra-n-pentoxide, zirconium tetraisopentoxide, zirconium tetra-n-hexoxide, zirconium tetra-n-heptoxide, zirconium tetra-n-octoxide, zirconium tetracyclohexoxide, zirconium tetrabenzoxide, zirconium tetraphenoxide, vanadium tetramethoxide, vanadium tetraethoxide, vanadium tetra-n-propoxide, vanadium tetraisopropoxide, vanadium tetra-n-butoxide, vanadium tetraisobutoxide, vanadium tetra-n-pentoxide, vanadium tetraisopentoxide, vanadium tetra-n-hexoxide, vanadium tetra-n-heptoxide, vanadium tetra-n-octoxide, vanadium tetracyclohexoxide, vanadium tetrabenzoxide, vanadium tetraphenoxide or mixtures thereof. Preferably, titanium tetraethoxide, titanium tetra-n-butoxide and zirconium tetra-n-butoxide are used in present invention because higher catalyst productivity and higher bulk density are obtained with the ability to vary the molecular weight distribution of the product by employing these preferred compounds.

The molar ratio of the modifying compound (C) to magnesium may be in the range of from about 0.01 to about 5.0, preferably from about 0.01 to about 3.0, more preferably from about 0.01 to about 1.0 and most preferably from about 0.01 to about 0.3, as higher catalyst productivity, higher bulk density and improved hydrogen response in polymerization are obtained. The modifying compound (C) may be reacted, preferably by stirring, with the product obtained in step (a) at a temperature of about 15°C to about 140°C for a duration of about 5 minutes to about 150 minutes, preferably at a temperature of 20°C to 80°C for a duration of 10 minutes to 100 minutes.

The modifying compounds (A), (B) and (C) can be contacted in any order or simultaneously with the solid magnesium containing support obtained in step (a). Preferably, (A) is added first to the reaction product obtained in step (a) and then (B), followed by the addition of (C) as higher catalyst productivity and higher product bulk density are obtained by employing this order of adding the modifying compounds. Pre-mixtures of the individual catalyst components can also be effectively utilized in this invention.

Preferably, when modifying compound (A) is methyl n-propyl ketone and modifying compound (C) is titanium tetraethoxide, a further increase of molecular weight distribution is obtained when modifying compound (B) is selected in the following order from the group consisting of isobutyltrimethoxysilane, n-propyltriethoxysilane, tetraethoxysilane, n-butyltrichlorosilane and silicon tetrachloride, at the same levels of titanium halide compound.

In the preferred case when the modifying compound (B) is silicon tetrachloride and modifying compound (C) is titanium tetraethoxide, a further improved combination of catalyst productivity and bulk density is obtained when modifying compound (A) is selected in the following order from the group consisting of isobutyraldehyde, ethyl acetate, n-butyl acetate, methyl n-propyl ketone and isobutyric acid, at the same levels of titanium halide compound.

The titanium halide compound used in the present invention is represented by the general formula $TiX_4$, wherein Ti is a titanium atom and X is a halide atom.

Suitable titanium halide compounds include titanium tetrachloride, titanium tetrabromide, titanium tetrafluoride or mixtures thereof. The preferred titanium halide compound is titanium tetrachloride, as higher catalyst productivity is obtained. The molar ratio of the titanium halide compound to magnesium may be in the range of about 0.01 to about 10.0, preferably from about 0.01 to about 5.0 and more preferably from about 0.05 to about 1.0, as a better balance of high catalyst productivity and high bulk density is obtained.

The titanium halide compound may be added to the reaction mixture obtained by applying step (a) and step (b) in any conventional manner, such as by stirring, at a temperature of about 15°C to about 140°C for a duration of about 5 minutes to about 150 minutes, preferably at a temperature of 20°C to 80°C for a duration of 10 minutes to 100 minutes. The reaction mixture may be then dried using a nitrogen purge and/or by vacuum at a temperature from about 15°C to about 140°C, preferably 30°C to 100°C and most preferably 50°C to 80°C to yield the final solid catalyst component.

The total molar ratio of the modifying compound (C) and the titanium halide compound to magnesium may be in the range of from about 0.01 to about 10.0, preferably of from about 0.01 to about 5.0 and more preferably of from about 0.05 to about 1.0, as a better balance of high catalyst productivity and high bulk density is obtained.

The total molar ratio of the modifying compound (C) and the titanium halide compound to hydroxyl (OH) groups in the support after dehydration may be in the range of from about 0.01 to about 10.0, preferably of from about 0.01 to about 5.0 and more preferably of from about 0.05 to about 1.0, as a better balance of high catalyst productivity and high bulk density is obtained. Higher levels would produce high catalyst productivity though with reduced bulk density, especially in a gas phase polymerization processes. Further, applying these amounts eliminates the requirement to conduct solvent decanting, solvent filtering, solvent washing steps in catalyst preparation and hence eliminates generation of highly hazardous solvent waste material.

Co-catalyst

The co-catalyst is typically an organometallic compound such as aluminum alkyls, aluminum alkyl hydrides, lithium aluminum alkyls, zinc alkyls, calcium alkyls, magnesium alkyls or mixtures thereof. Preferred co-catalysts are represented by the general formula $R^{14}_n AlX_{3-n}$, wherein X represents a halide atom; n represents an integer from 0 to 3; and $R^{14}$ is selected from a group of compounds comprising an alkyl group, alkenyl group, alkadienyl group, aryl group, alkaryl group, alkenylaryl group and alkadienylaryl group. $R^{14}$ may have from 1 to 20 carbon atoms. Suitable examples of the cocatalyst include trimethylaluminum, triethylaluminum, tri-isobutylaluminum, tri-n-hexylaluminum, tri-n-octylaluminum, diethylaluminum chloride, diisobutylalumium chloride, ethylaluminium dichloride, isobutyl laluminum dichloride and mixtures thereof. Preferably, the cocatalyst is trimethylaluminum, triethylaluminum and/or tri-isobutylaluminum; and more preferably, the cocatalyst is triethylaluminum.

The cocatalyst may be used in a molar ratio of aluminum in the co-catalyst to titanium in the solid catalyst component of from about 1 to about 500, more preferably from 10 to 250, as high catalyst productivity is obtained.

Catalyst system

The catalyst system used according to the present invention can be applied in slurry, gas or solution phase conventional processes to obtain polyethylenes. These processes have already been described in the prior art and are thus well-known to the skilled person. Preferably, ethylene homopolymers and copolymers are produced by gas phase processes, such as stirred bed reactors and fluidized bed reactors or by slurry phase processes under polymerisation conditions already known in the art. Illustrative of gas phase processes are those disclosed for example in US 4302565 and US 4302566. A suitable example is a gas phase fluidized bed polymerization reactor fed by a dry or slurry solid catalyst feeder. The solid catalyst component may be introduced to the reactor in a site within the reaction zone to control the reactor production rate. The reactive gases, including ethylene and other alphaolefins, hydrogen and nitrogen may be introduced to the reactor. The produced polymer may be discharged from the reaction zone through a discharge system. The bed of polymer particles in the reaction zone may be kept in fluidized state by a recycle stream that works as a fluidizing medium as well as to dissipate exothermal heat generated within the reaction zone. The reaction and compression heats can be removed from the recycle stream in an external heat exchange system in order to control the reactor temperature. Other means of heat removal from within the reactor can also be utilized, for example by the cooling resulting from vaporization of hydrocarbons such as isopentane, n-hexane or isohexane within the reactor. These hydrocarbons can be fed to the reactor as part of component reactant feeds and/or separately to the reactor to improve heat removal capacity from the reactor. The gas composition in the reactor can be kept constant to yield a polymer with the required specifications by feeding the reactive gases, hydrogen and nitrogen to make-up the composition of recycle stream.

Suitable operating conditions for the gas phase fluidized bed reactor typically include temperatures in the range of about 50°C to about 115°C, more preferably from 70°C to 110°C, an ethylene partial pressure from about 3 bar to 15 bar, more preferably from 5 bar to 10 bar and a total reactor pressure from about 10 bar to 40 bar, more preferably from 15 bar to 30 bar. The superficial velocity of the gas, resulting from the flow rate of recycle stream within reactor may be from about 0.2 m/s to about 1.2 m/s, more preferably 0.2 m/s to 0.9 m/s.

Although the invention has been described in detail for purposes of illustration, it is understood that such detail is solely for that purpose and variations can be made therein by those skilled in the art without departing from the spirit and scope of the invention as defined in the claims.

It is further noted that the invention relates to all possible combinations of features described herein, preferred in particular are those combinations of features that are present in the claims.

It is noted that the term "comprising" does not exclude the presence of other elements. However, it is also to be understood that a description on a product comprising certain components also discloses a product consisting of these components. Similarly, it is also to be understood that a description on a process comprising certain steps also discloses a process consisting of these steps.

The invention will be elucidated by the following examples without being restricted thereby.

## Examples

### Example I

A solid catalyst component was prepared according to Example 48 of WO2012/069157:

340 g of Sylopol 955 silica which had been dehydrated at 600°C for 4 hours under a nitrogen flow was placed in a 10 liter flask. 2040 cm$^3$ of isopentane was added to slurry the silica, then 340.0 mmol of di-n-butylmagnesium was added to the flask and the resultant mixture was stirred for 60 minutes at a temperature of 35°C. Then, 476.0 mmol of methyl n-propyl ketone was added to the flask and the resultant mixture was stirred for 60 minutes at a temperature of 35°C. Then, 34.0 mmol of tetraethoxysilane was added to the flask and the resultant mixture was stirred for 30 minutes at a temperature of 35°C. Next, 34.0 mmol of titanium tetraethoxide was added to the flask and the resultant mixture was stirred for 30 minutes at a temperature of 35°C. Subsequently, 238.0 mmol of titanium tetrachloride was added to the flask and the resultant mixture was stirred for 30 minutes at a temperature of 35°C. Finally, the slurry was dried using a nitrogen purge at 70°C for 3.5 hours to yield a free-flowing solid product.

In accordance with Example 50 of WO2012/069157, the solid catalyst component thus obtained (SS-2) was used for the synthesis of 1-butene linear low density polyethylene (LLDPE) with a melt index of 1.0 g/10 min and a polymer density of 918 kg/m$^3$ was produced in a fluidized bed gas phase polymerization reactor. The fluidized bed gas phase polymerization reactor had a 45 cm internal diameter and was operated with a 140 cm reaction zone height. The solid catalyst component was fed to the reactor using a dry solid catalyst feeder to maintain a production rate at 10 kg per hour. Ethylene, 1-butene, hydrogen and nitrogen were introduced to the reactor to yield polymer with the required specifications. 5 wt.% triethylaluminum (co-catalyst) solution in isopentane was continuously introduced to the reactor at a feed rate 0.08 kg per hour. The reactor temperature was maintained at 86°C, ethylene partial pressure at 7.0 bar, total reactor pressure at 20.7 bar and superficial gas velocity at 0.42 m/s. The solid catalyst component was ran for three consecutive days in the fluidized bed gas phase polymerization reactor and corresponding polymerization data is as follows:

| Hydrogen to Ethylene Molar ratio | 1-Butene to Ethylene Molar ratio | Fines | Productivity | Bulk Density |
|---|---|---|---|---|
| | | % < 125 microns | g PE / g catalyst | kg/m$^3$ |
| 0.11 | 0.41 | 0.03 | 6316 | 346 |

200 ppm of Irganox 1076, 500 ppm of zinc stearate and 800 ppm of Weston 399 were added as additives in a Henschel mixer and mixed for 5 minutes together with 25 kg of the 1-butene linear low density polyethylene resin produced. The compounded material was pelletized using a ZSK-30 twin-screw extruder under the following conditions: a temperature profile of 130°C to 210°C, screw speed of 200 rpm, screw diameter of 30 mm, screw length to diameter ratio of 26 and an output rate of 20 kg per hour. Evaluation of the pellet is reported in Table 1.

The obtained pellets were converted to 25 micron blown film using a Battenfeld machine under the following conditions: a temperature profile of 190°C to 200°C, a screw speed of 60 rpm, a screw diameter of 60 mm, screw length to diameter ratio of 27, a die gap of 2.3 mm, a frost line height of 40 cm, a blow-up ratio (BUR) of 2.5:1 and an output rate of 58 kg per hour.

Comparative experiment

As comparative experiment, pellets and a film product was made from a commercial Ziegler Natta LLDPE by the same extruder under the same extrusion conditions as above. Amounts and types of the additives were also the same as above. Evaluation of the pellets and the film product obtained is reported in Table 1.

The LLDPE according to the invention shows better results for various properties compared to the LLDPE made using a conventional ZN catalyst (comparative LLDPE).

The density of the LLDPE according to the invention and the comparative LLDPE were similar without any significant differences.

The melt index (MI 2.16kg/190 °C) of the LLDPE according to the invention and the comparative LLDPE were similar without any significant differences.

The High Load Melt Index (HLMI 21.6kg/190°C) of the LLDPE according to the invention was higher than that of the comparative LLDPE, which is an indication of the ease of the processability and the broader MWD of the LLDPE according to the invention.

The MFR (Melt Flow Ratio 21.6kg/2.16kg) of the LLDPE according to the invention was higher than that of the comparative LLDPE, which is an indication of the ease of the processability and broader MWD of the LLDPE according to the invention.

Mn and Mw determined by GPC were higher for the LLDPE according to the present invention than for the comparative LLDPE. The higher Mw indicates higher tensile properties. The MWD was broader for the LLDPE according to the present invention, which shows an easier processability. The broader MWD means higher melt strength, higher die swell and higher strain hardening. The broader MWD also means a higher ESCR (Environmental Stress Crack Resistance), which is desirable for applications such as the drip irrigation pipe.

Mz and Mz+1 were significantly higher for the LLDPE according to the present invention. The higher Mz+1 means more co-monomer incorporation in the high molecular weight zone of the distribution, thus, more tie bonds. This translates to excellent ESCR. Also, the higher Mz+1 means higher die swell.

Atomic Force Microscopy (AFM) of the film showed that the spherulites are smaller and tightly packed in in the LLDPE according to the invention. The finer spherulites indicate that the pipe of the present invention can be coiled into bundles more easily. This is especially suitable for use in a drip irrigation pipe which has to be coiled into bundles during the off season in agriculture.

The melt stretching force and melt stretching stress were determined by a capillary rheometer by attaching an end of a melt strand of the polyethylene placed in the capillary rheometer to a pulley and accelerating the pulley at 0.12 cm/s$^2$ at 190 °C until the melt strand breaks. The capillary rheometer has a die diameter of 1mm and a die length of 10 mm. The melt stretching force and stress were higher for the LLDPE according to the invention compared with the comparative LLDPE. The higher melt strength is an indication of a better ESCR which is advantageous for a drip irrigation pipe and less sagging of the pipe.

The DSC crystalline melting and crystallinity temperatures were similar between the LLDPE according to the invention and the comparative LLDPE.

The results as obtained showed that the crystallinity temperature of LLDPE according to the invention was higher than comparative LLDPE by 2.56°C; this means that LLDPE according to the invention cools faster than the comparative LLDPE due to the finer spherulites of the LLDPE according to the invention.

It can be concluded that the LLDPE according to the invention is highly suitable for making a pipe, especially a drip irrigation pipe, due to the higher melt strength indicating a higher ESCR and less sagging of the pipe.

Table 1

| TEST | METHOD | Example 1 | Comparative experiment |
|---|---|---|---|
| Density kg/m$^3$ | ASTM D-792-08 | 920 | 920 |
| MI(2.16/190°C) g/10min | ASTM D-1238-04 | 0.92 | 0.942 |
| HLMI(21.6/190°C) g/10min | ASTM D-1238-04 | 28.11 | 24.64533 |
| MFR(21.6/2.16) | ASTM D-1238-04 | 28.82 | 25.5775 |
| Co-monomer type | ASTM D-5017-96 | Butene | Butene |
| Co-monomer content % mole | ASTM D-5017-96 | 4.448 | 4.7 |
| Branching per 1000 C | ASTM D-5017-96 | 21.507 | 22.52333 |
| Mn g/mole | ASTM D-6474-99 | 43369.00 | 34689.33 |
| Mw g/mole | ASTM D-6474-99 | 180733 | 121061.3 |
| MWD (Mw/Mn) | ASTM D-6474-99 | 3.97 | 3.5091 |
| Mz g/mole | ASTM D-6474-99 | 647074.25 | 344405.7 |
| Mz+1 g/mole | ASTM D-6474-99 | 1450908.55 | 711863.7 |
| Mz/Mw | ASTM D-6474-99 | 3.580 | 2.845 |
| Mz+1/Mw | ASTM D-6474-99 | 8.028 | 5.880 |
| Crystallinity % | ASTM D-3418-08 | 42.45 | 43.015 |
| Crystalline melting temperature °C | ASTM D-3418-08 | 122.69 | 121.01 |
| Crystallinity temp. TC °C | ASTM D-3418-08 | 108.46 | 105.9 |
| Melt stretch force (cN) | described above | 6.89 | 4.66 |
| Melt stretch stress (N/mm$^2$) | described above | 3.8 | 1.07 |

## Claims

1. A pipe comprising polyethylene, wherein the polyethylene is produced in the presence of a solid catalyst component and a co-catalyst, wherein the solid catalyst component is prepared by a process comprising the steps of:

   (a) contacting a dehydrated support having hydroxyl groups with a magnesium compound having the general formula MgR1R2, wherein R1 and R2 are the same or different and are independently selected from the group comprising an alkyl group, alkenyl group, alkadienyl group, aryl group, alkaryl group, alkenylaryl group and alkadienylaryl group;
   (b) contacting the product obtained in step (a) with modifying compounds (A), (B) and (C), wherein:

   (A) is at least one compound selected from the group consisting of carboxylic acid, carboxylic acid ester, ketone, acyl halide, aldehyde and alcohol;
   (B) is a compound having the general formula R11f(R120)gSiXh, wherein f, g and h are each integers from 0 to 4 and the sum of f, g and h is equal to 4 with a proviso that when h is equal to 4 then modifying compound (A) is not an alcohol, Si is a silicon atom, O is an oxygen atom, X is a halide atom and R11 and R12 are the same or different and are independently selected from the group comprising an alkyl group, alkenyl group, alkadienyl group, aryl group, alkaryl group, alkenylaryl group and alkadienylaryl group;
   (C) is a compound having the general formula (R13O)4M, wherein M is a titanium atom, a zirconium atom or a vanadium atom, O is an oxygen atom and R13 is selected from the group comprising an alkyl group, alkenyl group, alkadienyl group, aryl group, alkaryl group, alkenylaryl group and alkadienylaryl group; and

   (c) contacting the product obtained in step (b) with a titanium halide compound having the general formula TiX4, wherein Ti is a titanium atom and X is a halide atom, whereby the polyethylene has a molecular weight Mz+1 of at least 720,000 g/mol and less than 2,500,000 g/mol, wherein the polyethylene has a density of about 910 kg/m$^3$ to about 925 kg/m$^3$, and wherein the polyethylene has a molecular weight distribution (MWD) of 3.6 to 5.5.

2. The pipe according to Claim 1 wherein the polyethylene has an Mz/Mw of between 2.8 and 4.5, preferably between 3 and 4, further preferred between 3.2 und 3.8, further preferred between 3.4 and 3.7 and/or an Mz+1/Mw of between 6 and 10, preferably between 7 and 9, further preferred between 8 and 9.

3. The pipe according to any of the Claims 1-2 wherein the polyethylene has a molecular weight Mz+1 of at least 800,000 g/mol, more preferably at least 900,000 g/mol, more preferably at least 1,000,000 g/mol or between 800,000 g/mol and 2,000,000, preferably between 900,000 g/mol and 1,700,000 g/mol, further preferred between 1,000,000 g/mol and 1,600,000 g/mol or a molecular weight Mz between 350,000 g/mol and 1,200,000 g/mol, preferably between 400,000 g/mol and 1,000,000 g/mol, further preferred between 450,000 g/mol and 900,000 g/mol, further preferred between 500,000 g/mol and 800,000 g/mol, further preferred between 550,000 g/mol and 750,000 g/mol.

4. The pipe according to any of the Claims 1-3 wherein the polyethylene has a melt stretching force of at least 5 cN as determined by a capillary rheometer at 190 °C.

5. The pipe according to any of the Claims 1-4 wherein the polyethylene has a melt stretching stress of at least 1.2 N/mm$^2$ as determined by a capillary rheometer at 190 °C.

6. The pipe according to any of the claims 1-5, wherein the composition comprises 80-99 wt% of the polyethylene and 1-10 wt% of the carbon black and 0-19 wt% of optional additives, with respect to the total composition, which represents 100 wt%.

7. The pipe according to any of the claims 1-6, wherein the polyethylene or the composition comprises additives, optionally selected from one or more of stabilizers, especially antioxidant agents, acid scavengers and/or antistatic agents and utilization agents, especially processing aid agents, whereby the total amount of these additives is between 0 wt% and 19 wt% based on the total amount of the polyethylene or polyethylene composition, which represents 100 wt%.

8. A pipe consisting of the polyethylene or the composition according to any one of the Claims 1-7.

9. The pipe according to claim 8, wherein the pipe is a drip irrigation pipe.

10. A process for making the pipe according to any one of the Claims 1-9, comprising the steps of: providing the composition, melting the composition and extruding the melted composition from a die.

11. Use of a polyethylene for making a drip irrigation pipe, wherein the polyethylene is produced in the presence of a solid catalyst component and a co-catalyst, wherein the solid catalyst component is prepared by a process comprising the steps of:

(a) contacting a dehydrated support having hydroxyl groups with a magnesium compound having the general formula MgR1R2, wherein R1 and R2 are the same or different and are independently selected from the group comprising an alkyl group, alkenyl group, alkadienyl group, aryl group, alkaryl group, alkenylaryl group and alkadienylaryl group;
(b) contacting the product obtained in step (a) with modifying compounds (A), (B) and (C), wherein:

(A) is at least one compound selected from the group consisting of carboxylic acid, carboxylic acid ester, ketone, acyl halide, aldehyde and alcohol;
(B) is a compound having the general formula R11f(R12O)gSiXh, wherein f, g and h are each integers from 0 to 4 and the sum of f, g and h is equal to 4 with a proviso that when h is equal to 4 then modifying compound (A) is not an alcohol, Si is a silicon atom, O is an oxygen atom, X is a halide atom and R11 and R12 are the same or different and are independently selected from the group comprising an alkyl group, alkenyl group, alkadienyl group, aryl group, alkaryl group, alkenylaryl group and alkadienylaryl group;
(C) is a compound having the general formula (R13O)4M, wherein M is a titanium atom, a zirconium atom or a vanadium atom, O is an oxygen atom and R13 is selected from the group comprising an alkyl group, alkenyl group, alkadienyl group, aryl group, alkaryl group, alkenylaryl group and alkadienylaryl group; and

(c) contacting the product obtained in step (b) with a titanium halide compound having the general formula TiX4, wherein Ti is a titanium atom and X is a halide atom, whereby the polyethylene has a molecular weight Mz+1 of at least 720,000 g/mol and less than 2,500,000 g/mol;

wherein the polyethylene has a density of about 910 kg/m$^3$ to about 925 kg/m$^3$, and wherein the polyethylene has a molecular weight distribution (MWD) of 3.6 to 5.5.

**Patentansprüche**

1. Rohr umfassend Polyethylen, wobei das Polyethylen in Gegenwart einer festen Katalysatorkomponente und eines Cokatalysators hergestellt wird, wobei die feste Katalysatorkomponente durch ein Verfahren hergestellt wird, das die folgenden Schritte umfasst:

   (a) Inkontaktbringen eines dehydratisierten Trägers mit Hydroxylgruppen mit einer Magnesiumverbindung mit der allgemeinen Formel MgR1R2, wobei R$^1$ und R2 gleich oder verschieden sind und unabhängig aus der Gruppe umfassend eine Alkylgruppe, Alkenylgruppe, Alkadienylgruppe, Arylgruppe, Alkarylgruppe, Alkenylarylgruppe und Alkadienylarylgruppe ausgewählt sind;
   (b) Inkontaktbringen des in Schritt (a) erhaltenen Produkts mit modifizierenden Verbindungen (A), (B) und (C), wobei:

      (A) mindestens eine Verbindung ist, die aus der aus Carbonsäure, Carbonsäureester, Keton, Acylhalogenid, Aldehyd und Alkohol bestehenden Gruppe ausgewählt ist;
      (B) eine Verbindung mit der allgemeinen Formel R11f(R12O)gSiXh ist, wobei f, g und h jeweils ganze Zahlen von 0 bis 4 sind und die Summe von f, g und h gleich 4 ist, mit der Maßgabe, dass die modifizierende Verbindung (A) kein Alkohol ist, wenn h gleich 4 ist, Si ein Siliziumatom ist, O ein Sauerstoffatom ist, X ein Halogenidatom ist und R11 und R12 gleich oder verschieden und unabhängig aus der Gruppe umfassend eine Alkylgruppe, Alkenylgruppe, Alkadienylgruppe, Arylgruppe, Alkarylgruppe, Alkenylarylgruppe und Alkadienylarylgruppe ausgewählt sind;
      (C) eine Verbindung mit der allgemeinen Formel (R130)4M ist, wobei M ein Titanatom, ein Zirkoniumatom oder ein Vanadiumatom ist, O ein Sauerstoffatom ist und R13 aus der Gruppe umfassend eine Alkylgruppe, Alkenylgruppe, Alkadienylgruppe, Arylgruppe, Alkarylgruppe, Alkenylarylgruppe und Alkadienylarylgruppe ausgewählt ist; und

   (c) Inkontaktbringen des in Schritt (b) erhaltenen Produkts mit einer Titanhalogenidverbindung der allgemeinen Formel TiX4, wobei Ti ein Titanatom und X ein Halogenidatom ist, wobei das Polyethylen eine Molekülmasse Mz+1 von mindestens 720.000 g/mol und weniger als 2.500.000 g/mol aufweist, wobei das Polyethylen eine Dichte von etwa 910 kg/m$^3$ bis etwa 925 kg/m$^3$ aufweist und wobei das Polyethylen eine Molekülmassenverteilung (MWD) von 3,6 bis 5,5 aufweist.

2. Rohr nach Anspruch 1, wobei das Polyethylen ein Mz/Mw zwischen 2,8 und 4,5, bevorzugt zwischen 3 und 4, bevorzugter zwischen 3,2 und 3,8, bevorzugter zwischen 3,4 und 3,7 und/oder ein Mz+1/Mw zwischen 6 und 10, bevorzugt zwischen 7 und 9, bevorzugter zwischen 8 und 9, aufweist.

3. Rohr nach einem der Ansprüche 1 bis 2, wobei das Polyethylen eine Molekülmasse Mz+1 von mindestens 800.000 g/mol, bevorzugter von mindestens 900.000 g/mol, bevorzugter von mindestens 1.000.000 g/mol oder zwischen 800.000 g/mol und 2.000.000 g/mol, bevorzugt zwischen 900.000 g/mol und 1.700.000 g/mol, bevorzugter zwischen 1.000.000 g/mol und 1.600.000 g/mol, oder eine Molekülmasse Mz zwischen 350.000 g/mol und 1.200.000 g/mol, bevorzugt zwischen 400.000 g/mol und 1.000.000 g/mol, bevorzugter zwischen 450.000 g/mol und 900.000 g/mol, bevorzugter zwischen 500.000 g/mol und 800.000 g/mol, bevorzugter zwischen 550.000 g/mol und 750.000 g/mol, aufweist.

4. Rohr nach einem der Ansprüche 1 bis 3, wobei das Polyethylen eine Schmelzstreckkraft von mindestens 5 cN aufweist, bestimmt mit einem Kapillarrheometer bei 190 °C.

5. Rohr nach einem der Ansprüche 1 bis 4, wobei das Polyethylen eine Schmelzstreckspannung von mindestens 1,2 N/mm2 aufweist, bestimmt mit einem Kapillarrheometer bei 190 °C.

6. Rohr nach einem der Ansprüche 1 bis 5, wobei die Zusammensetzung 80-99 Gew.-% Polyethylen und 1-10 Gew.-% Ruß und 0-19 Gew.-% optionale Zusatzstoffe, bezogen auf die Gesamtzusammensetzung, die 100 Gew.-% ausmacht, umfasst.

7. Rohr nach einem der Ansprüche 1 bis 6, wobei das Polyethylen oder die Zusammensetzung Zusatzstoffe umfasst, optional ausgewählt aus einem oder mehreren von Stabilisatoren, insbesondere Antioxidantien, Säurefängern und/oder Antistatikmitteln und Verwendungsmitteln, insbesondere Verarbeitungshilfsmitteln, wobei die Gesamtmenge dieser Zusatzstoffe zwischen 0 Gew.-% und 19 Gew.-%, bezogen auf die Gesamtmenge des Polyethylens oder der Polyethylenzusammensetzung, die 100 Gew.-% ausmacht, beträgt.

8. Rohr, bestehend aus dem Polyethylen oder der Zusammensetzung nach einem der Ansprüche 1 bis 7.

9. Rohr nach Anspruch 8, wobei es sich bei dem Rohr um ein Tropfbewässerungsrohr handelt.

10. Verfahren zum Herstellen des Rohrs nach einem der Ansprüche 1 bis 9, umfassend die Schritte: Bereitstellen der Zusammensetzung, Schmelzen der Zusammensetzung und Extrudieren der geschmolzenen Zusammensetzung aus einer Düse.

11. Verwendung eines Polyethylens zum Herstellen eines Tropfbewässerungsrohrs, wobei das Polyethylen in Gegenwart einer festen Katalysatorkomponente und eines Cokatalysators hergestellt wird, wobei die feste Katalysatorkomponente durch ein Verfahren hergestellt wird, das die folgenden Schritte umfasst:

(a) Inkontaktbringen eines dehydratisierten Trägers mit Hydroxylgruppen mit einer Magnesiumverbindung mit der allgemeinen Formel MgR1R2, wobei R1 und R2 gleich oder verschieden sind und unabhängig aus der Gruppe umfassend eine Alkylgruppe, Alkenylgruppe, Alkadienylgruppe, Arylgruppe, Alkarylgruppe, Alkenylarylgruppe und Alkadienylarylgruppe ausgewählt sind;
(b) Inkontaktbringen des in Schritt (a) erhaltenen Produkts mit modifizierenden Verbindungen (A), (B) und (C), wobei:

(A) mindestens eine Verbindung ist, die aus der aus Carbonsäure, Carbonsäureester, Keton, Acylhalogenid, Aldehyd und Alkohol bestehenden Gruppe ausgewählt ist;
(B) eine Verbindung mit der allgemeinen Formel $R11f(R12O)gSiXh$ ist, wobei f, g und h jeweils ganze Zahlen von 0 bis 4 sind und die Summe von f, g und h gleich 4 ist, mit der Maßgabe, dass die modifizierende Verbindung (A) kein Alkohol ist, wenn h gleich 4 ist, Si ein Siliziumatom ist, O ein Sauerstoffatom ist, X ein Halogenidatom ist und R11 und R12 gleich oder verschieden und unabhängig aus der Gruppe umfassend eine Alkylgruppe, Alkenylgruppe, Alkadienylgruppe, Arylgruppe, Alkarylgruppe, Alkenylarylgruppe und Alkadienylarylgruppe ausgewählt sind;
(C) eine Verbindung mit der allgemeinen Formel $(R13O)4M$ ist, wobei M ein Titanatom, ein Zirkoniumatom oder ein Vanadiumatom ist, O ein Sauerstoffatom ist und R13 aus der Gruppe umfassend eine Alkylgruppe, Alkenylgruppe, Alkadienylgruppe, Arylgruppe, Alkarylgruppe, Alkenylarylgruppe und Alkadienylarylgruppe ausgewählt ist; und

(c) Inkontaktbringen des in Schritt (b) erhaltenen Produkts mit einer Titanhalogenidverbindung der allgemeinen Formel $TiX4$, wobei Ti ein Titanatom und X ein Halogenidatom ist, wobei das Polyethylen eine Molekülmasse $M_{z+1}$ von mindestens 720.000 g/mol und weniger als 2.500.000 g/mol aufweist;

wobei das Polyethylen eine Dichte von etwa 910 kg/m$^3$ bis etwa 925 kg/$^3$ aufweist und wobei das Polyethylen eine Molekülmassenverteilung (MWD) von 3,6 bis 5,5 aufweist.

## Revendications

1. Tuyau comprenant du polyéthylène, dans lequel le polyéthylène est produit en présence d'un composant catalyseur solide et d'un co-catalyseur, dans lequel le composant catalyseur solide est préparé par un procédé comprenant les étapes de :

(a) mise en contact d'un support déshydraté présentant des groupes hydroxyle avec un composé magnésium répondant à la formule générale MgR1R2, dans laquelle R1 et R2 sont identiques ou différents et sont indépendamment choisis dans le groupe comprenant un groupe alkyle, un groupe alcényle, un groupe alcadiényle, un groupe aryle, un groupe alkaryle, un groupe alcénylaryle et un groupe alcadiénylaryle ;

(b) mise en contact du produit obtenu à l'étape (a) avec des composés modificateurs (A), (B) et (C), où :

(A) est au moins un composé choisi dans le groupe constitué par l'acide carboxylique, l'ester d'acide carboxylique, la cétone, l'halogénure d'acyle, l'aldéhyde et l'alcool ;

(B) est un composé répondant à la formule générale R11f(R12O)gSiXh, dans laquelle f, g et h sont chacun des nombres entiers de 0 à 4 et la somme de f, g et h est égale à 4, à condition que lorsque h est égal à 4, alors le composé modificateur (A) ne soit pas un alcool, Si est un atome de silicium, O est un atome d'oxygène, X est un atome d'halogénure et R11 et R12 sont identiques ou différents et sont indépendamment choisis dans le groupe comprenant un groupe alkyle, un groupe alcényle, un groupe alcadiényle, un groupe aryle, un groupe alkaryle, un groupe alcénylaryle et un groupe alcadiénylaryle ;

(C) est un composé répondant à la formule générale (R130)4M, dans laquelle M est un atome de titane, un atome de zirconium ou un atome de vanadium, O est un atome d'oxygène et R13 est choisi dans le groupe comprenant un groupe alkyle, un groupe alcényle, un groupe alcadiényle, un groupe aryle, un groupe alkaryle, un groupe alcénylaryle et un groupe alcadiénylaryle ; et

(c) mise en contact du produit obtenu à l'étape (b) avec un composé halogénure de titane répondant à la formule générale TiX4, dans laquelle Ti est un atome de titane et X est un atome d'halogénure, moyennant quoi le polyéthylène présente un poids moléculaire Mz+1 d'au moins 720000 g/mol et inférieur à 2500000 g/mol, dans lequel le polyéthylène présente une densité d'environ 910 kg/m$^3$ à environ 925 kg/m$^3$, et dans lequel le polyéthylène présente une distribution de poids moléculaire (MWD) de 3,6 à 5,5.

2. Tuyau selon la revendication 1, dans lequel le polyéthylène présente un Mz/Mw compris entre 2,8 et 4,5, de préférence entre 3 et 4, de préférence encore entre 3,2 et 3,8, de préférence encore entre 3,4 et 3,7 et/ou un Mz+1/Mw compris entre 6 et 10, de préférence entre 7 et 9, de préférence encore entre 8 et 9.

3. Tuyau selon l'une des revendications 1 et 2, dans lequel le polyéthylène présente un poids moléculaire Mz+1 d'au moins 800000 g/mol, plus préférablement d'au moins 900000 g/mol, plus préférablement d'au moins 1000000 g/mol ou entre 800000 g/mol et 2000000, de préférence entre 900000 g/mol et 1700000 g/mol, de préférence encore entre 1000000 g/mol et 1600000 g/mol ou un poids moléculaire Mz entre 350000 g/mol et 1200000 g/mol, de préférence entre 400000 g/mol et 1000000 g/mol, de préférence encore entre 450000 g/mol et 900000 g/mol, de préférence encore entre 500000 g/mol et 800000 g/mol, de préférence encore entre 550000 g/mol et 750000 g/mol.

4. Tuyau selon l'une des revendications 1 à 3, dans lequel le polyéthylène présente une force d'étirement à l'état fondu d'au moins 5 cN, telle que déterminée par un rhéomètre capillaire à 190°C.

5. Tuyau selon l'une des revendications 1 à 4, dans lequel le polyéthylène présente une contrainte d'étirement à l'état fondu d'au moins 1,2 N/mm2, telle que déterminée par un rhéomètre capillaire à 190°C.

6. Tuyau selon l'une des revendications 1 à 5, dans lequel la composition comprend 80 à 99% en poids du polyéthylène et 1 à 10% en poids du noir de carbone et 0 à 19% en poids d'additifs facultatifs, par rapport à la composition totale, qui représente 100% en poids.

7. Tuyau selon l'une des revendications 1 à 6, dans lequel le polyéthylène ou la composition comprend des additifs, éventuellement choisis parmi un ou plusieurs stabilisants, notamment des agents antioxydants, des capteurs d'acide et/ou des agents antistatiques et des agents d'utilisation, notamment des agents auxiliaires de traitement, moyennant quoi la quantité totale de ces additifs est comprise entre 0% en poids et 19% en poids par rapport à la quantité totale du polyéthylène ou de la composition de polyéthylène, qui représente 100 % en poids.

8. Tuyau constitué du polyéthylène ou de la composition selon l'une quelconque des revendications 1 à 7.

9. Tuyau selon la revendication 8, dans lequel le tuyau est un tuyau d'irrigation goutte à goutte.

10. Procédé de fabrication du tuyau selon l'une quelconque des revendications 1 à 9, comprenant les étapes de : fourniture de la composition, fusion de la composition et extrusion de la composition fondue à partir d'une filière.

11. Utilisation d'un polyéthylène pour fabriquer un tuyau d'irrigation goutte à goutte, dans laquelle le polyéthylène est produit en présence d'un composant catalyseur solide et d'un co-catalyseur, dans laquelle le composant catalyseur solide est préparé par un procédé comprenant les étapes de :

(a) mise en contact d'un support déshydraté présentant des groupes hydroxyle avec un composé magnésium répondant à la formule générale MgR1R2, dans laquelle R1 et R2 sont identiques ou différents et sont indépendamment choisis dans le groupe comprenant un groupe alkyle, un groupe alcényle, un groupe alcadiényle, un groupe aryle, un groupe alkaryle, un groupe alcénylaryle et un groupe alcadiénylaryle ;
(b) mise en contact du produit obtenu à l'étape (a) avec des composés modificateurs (A), (B) et (C), où

(A) est au moins un composé choisi dans le groupe constitué par l'acide carboxylique, l'ester d'acide carboxylique, la cétone, l'halogénure d'acyle, l'aldéhyde et l'alcool ;
(B) est un composé répondant à la formule générale R11f(R12O)gSiXh, dans laquelle f, g et h sont chacun des nombres entiers de 0 à 4 et la somme de f, g et h est égale à 4, à condition que lorsque h est égal à 4, alors le composé modificateur (A) ne soit pas un alcool, Si est un atome de silicium, O est un atome d'oxygène, X est un atome d'halogénure et R11 et R12 sont identiques ou différents et sont indépendamment choisis dans le groupe comprenant un groupe alkyle, un groupe alcényle, un groupe alcadiényle, un groupe aryle, un groupe alkaryle, un groupe alcénylaryle et un groupe alcadiénylaryle ;
(C) est un composé répondant à la formule générale (R130)4M, dans laquelle M est un atome de titane, un atome de zirconium ou un atome de vanadium, O est un atome d'oxygène et R13 est choisi dans le groupe comprenant un groupe alkyle, un groupe alcényle, un groupe alcadiényle, un groupe aryle, un groupe alkaryle, un groupe alcénylaryle et un groupe alcadiénylaryle ; et

(c) mise en contact du produit obtenu à l'étape (b) avec un composé halogénure de titane répondant à la formule générale TiX4, dans laquelle Ti est un atome de titane et X est un atome d'halogénure, moyennant quoi le polyéthylène présente un poids moléculaire Mz+1 d'au moins 720000 g/mol et inférieur à 2500000 g/mol ;

dans laquelle le polyéthylène présente une densité d'environ 910 kg/m$^3$ à environ 925 kg/m$^3$ et dans laquelle le polyéthylène présente une distribution de poids moléculaire (MWD) de 3,6 à 5,5.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014072056 A
- WO 2012069157 A
- US 4302565 A
- US 4302566 A

**Non-patent literature cited in the description**

- **J.J. FRIPIAT ; J. UYTTERHOEVEN.** *J. Phys. Chem.,* 1962, vol. 66, 800